# DEMANDE DE BREVET EUROPEEN

(11) **EP 4 797 549 A1**
(43) Date de publication de la demande: **26.08.2026**
(21) Numéro de dépôt: 26159084.8
(22) Date de dépôt: 17.02.2026
(51) Int. Cl.: H04B 3/54, H04W 40/02, H04W 52/50, H04W 84/18, H04W 52/36

(54) **PROCEDE DE DEPLOIEMENT SUR TERRAIN D'UN DISPOSITIF NOEUD**

(30) Priorité: 24.02.2025 FR 2501885
(71) Demandeur: SAGEMCOM ENERGY & TELECOM SAS, 92270 Bois-Colombes (FR)
(72) Inventeur: HLEL, El Kefi, 92270 BOIS-COLOMBES (FR); RAZAZIAN, Kaveh, 92270 BOIS-COLOMBES (FR)
(74) Mandataire: Cabinet Le Guen Maillet

(57) **Abrégé**

Procédé de déploiement sur terrain d'un dispositif nœud comprenant une interface CPL et une interface RF, configurées chacune pour exécuter une procédure de connexion du dispositif nœud à l'un quelconque d'une pluralité de réseaux de communication, chacun des réseaux de communication étant du type maillé et comprenant un dispositif concentrateur auquel peut se connecter un ensemble de dispositifs nœuds. Le procédé est implémenté par une circuiterie électronique comprise dans le dispositif nœud. Le procédé comporte, au démarrage initial puis à chaque redémarrage matériel ou logiciel du dispositif nœud : augmenter progressivement (501) une puissance d'émission RF de l'interface RF lors d'une exécution de la procédure de connexion. Ceci permet de supprimer ou réduire le phénomène de migration depuis un réseau de communication favori vers un réseau de communication voisin, notamment lorsque le déploiement est effectué dans un environnement urbain.

## Description

### DOMAINE TECHNIQUE

Le domaine de l'invention est celui des réseaux de communication du type maillé et comprenant un dispositif concentrateur auquel peut se connecter un ensemble de dispositifs nœuds.

Plus précisément, la présente invention concerne un procédé de déploiement sur terrain d'un dispositif nœud hybride, comprenant une interface de communication par courants porteurs en ligne (CPL) et une interface de communication par radiofréquences (RF), chacune des interfaces CPL et RF étant configurée pour exécuter une procédure de connexion du dispositif nœud à l'un quelconque d'une pluralité de réseaux de communication.

La présente invention concerne également un dispositif nœud, ainsi qu'un produit programme d'ordinateur et un support de stockage permettant la mise en œuvre d'un tel procédé.

La présente invention s'applique notamment, mais non exclusivement, dans le cas où le dispositif nœud est un compteur communicant (aussi appelé « compteur intelligent » ou « smart meter » en anglais), par exemple un compteur électrique communicant, utilisé pour une application de comptage intelligent (« smart metering » en anglais).

### ETAT DE LA TECHNIQUE ANTERIEURE

D'une manière connue, de nombreux réseaux de communication ont une topologie (au moins au niveau logique) sous forme d'arbre pour permettre d'étendre la portée des communications. Les dispositifs d'un tel réseau de communication sont généralement appelés nœuds, ou encore dispositifs nœuds. Un dispositif concentrateur (aussi appelé « concentrateur de données » ou « nœud de base ») tient le rôle de racine du réseau de communication et gère le réseau de communication de manière à organiser le partage d'un même support de communication. Des dispositifs nœuds servent alors de relais pour le compte d'autres dispositifs nœuds du réseau de communication lorsque ces derniers n'arrivent pas à recevoir directement des informations du dispositif concentrateur.

On trouve notamment de tels réseaux de communication dans le cadre des réseaux d'alimentation électrique de type AMM (« Automated Meter Management » en anglais), mettant en œuvre une gestion automatique de relevés de compteurs électriques et dans lesquels des communications sont établies entre des compteurs électriques communicants (aussi appelés « compteurs intelligents » ou « smart meters ») et un dispositif concentrateur de données.

Dans la suite de la description, on considère une catégorie particulière de dispositifs nœuds, dits hybrides CPL et RF, du fait qu'ils comprennent deux interfaces de communication : l'une par courants porteurs en ligne (CPL) et l'autre par radiofréquences (RF). Ainsi, pour communiquer avec les autres dispositifs nœuds ou avec le dispositif concentrateur, chaque dispositif nœud hybride peut utiliser une liaison CPL ou une liaison RF. En d'autres termes, avec une technologie de communication hybride CPL et RF comme technologie de communication, par exemple dans les applications de comptage intelligent, les dispositifs nœuds (par exemple des compteurs électriques communicants) ainsi que le dispositif concentrateur sont dotés d'une double interface de communication CPL et RF. Parmi ces technologies on peut citer : le standard G3-PLC, spécifié dans la recommandation ITU-T G.9903 à partir de la version 2021 qui intègre le mode hybride, et le standard PRIME, à partir de la version 2022 qui intègre le mode hybride.

Par exemple, lors de sa connexion à un réseau personnel (ou PAN, pour « Personal Area Network » en anglais), un compteur électrique communicant hybride peut envoyer des trames balises (« BEACONS ») sur ses deux interfaces de communication CPL et RF. Idéalement, ceci lui permet d'utiliser l'une ou l'autre de ses deux interfaces CPL et RF pour se connecter à un réseau personnel favori. Par réseau personnel favori pour un compteur électrique, on entend le réseau personnel dont le dispositif concentrateur est installé dans le poste de transformation électrique BT (Basse Tension) duquel est issu le réseau de distribution électrique sur lequel est installé ce compteur électrique.

Les signaux CPL sont physiquement bloqués par les postes de transformation électriques BT. Par conséquent, quand il utilise son interface de communication CPL pour se connecter, un compteur électrique ne peut se connecter qu'à son réseau personnel favori (tel que défini plus haut).

En revanche, les signaux RF ne sont pas bloqués par les postes de transformation électriques BT et peuvent donc se propager d'une zone géographique à une autre (chaque zone géographique correspondant à un réseau personnel distinct), notamment en déploiement dans un environnement urbain où les zones géographiques adjacentes sont très proches les unes des autres. Par conséquent, quand il utilise son interface de communication RF pour se connecter, il se peut qu'un compteur électrique ne se connecte pas toujours à son réseau personnel favori. En effet, avec son interface RF, le compteur électrique peut parfois se connecter à un autre réseau personnel, dit voisin, dont le dispositif concentrateur est installé dans un autre poste de transformation électrique BT que le poste duquel est issu le réseau de distribution électrique sur lequel est installé le compteur électrique.

En d'autres termes, du fait de l'utilisation de l'interface RF, il existe alors une migration (non souhaitée) du compteur électrique communicant hybride CPL et RF, depuis le réseau personnel favori vers le réseau personnel voisin. On parle également de migration depuis une zone géographique favorite, associée au réseau personnel favori, vers une zone géographique voisine, associée au réseau personnel voisin.

Un inconvénient de ce phénomène de migration est qu'il crée un déséquilibre entre les différents réseaux personnels, certains dispositifs concentrateurs pouvant se retrouver à gérer la relève de mesures de consommation électrique d'un grand nombre de compteurs électriques communicants alors que d'autres dispositifs concentrateurs ne gèrent, au contraire, la relève de mesures de consommation électrique que d'un très petit nombre de compteurs électriques communicants.

Un autre inconvénient de ce phénomène de migration est qu'il a une influence négative sur la communicabilité des compteurs électriques communicants au sein de certains réseaux personnels. En effet, dans une zone géographique urbaine gérée par un dispositif concentrateur, une migration d'un certain nombre de compteurs électriques, depuis un réseau personnel associé à cette zone géographique vers d'autres réseaux personnels associés à d'autres zones géographiques adjacentes, provoque une réduction du nombre de compteurs électriques restants qui formeront le réseau personnel en question. Cette réduction influence négativement la communicabilité des compteurs appartenant à ce réseau personnel vu la nature maillée d'un tel réseau personnel. Pour mémoire, dans un réseau personnel comprenant des compteurs communicants hybrides, les compteurs électriques coopèrent via les liaisons CPL et RF pour construire un réseau maillé fiable dans le but de permettre à un compteur électrique de communiquer efficacement avec le dispositif concentrateur via un certain nombre des liens de communication CPL et RF.

Il existe donc un besoin de fournir une solution de déploiement sur terrain d'un dispositif nœud (par exemple un compteur communicant) hybride CPL et RF, permettant de supprimer ou réduire le phénomène de migration depuis le réseau de communication favori vers le réseau de communication voisin, notamment lorsque ce déploiement est effectué dans un environnement urbain.

### EXPOSE DE L'INVENTION

Il est proposé un procédé de déploiement sur terrain d'un dispositif nœud comprenant une première interface de communication par courants porteurs en ligne, dite interface CPL, et une deuxième interface de communication par radiofréquences, dite interface RF, chacune des interfaces CPL et RF étant configurée pour exécuter une procédure de connexion du dispositif nœud à l'un quelconque d'une pluralité de réseaux de communication, chacun des réseaux de communication étant du type maillé et comprenant un dispositif concentrateur auquel peut se connecter un ensemble de dispositifs nœuds, le procédé étant implémenté par une circuiterie électronique comprise dans le dispositif nœud, le procédé comportant, au démarrage initial puis à chaque redémarrage matériel ou logiciel du dispositif nœud : augmenter progressivement une puissance d'émission RF de l'interface RF lors d'une exécution de la procédure de connexion, de façon à supprimer ou réduire un phénomène de migration du dispositif nœud depuis un réseau de communication favori vers un autre réseau de communication de ladite pluralité de réseaux de communication.

Ainsi, en augmentant progressivement la puissance d'émission RF de l'interface RF lors d'une exécution de la procédure de connexion, la solution proposée permet de supprimer ou réduire le phénomène de migration puisqu'elle favorise une connexion du dispositif nœud en utilisant l'interface CPL (cas garantissant une connexion au réseau de communication favori tel que défini plus haut) ou en utilisant l'interface RF mais avec une faible puissance (au début de la procédure de connexion) donc via une liaison RF avec un autre dispositif nœud (ou bien le dispositif concentrateur) très proche physiquement, ce qui augmente les chances que la connexion se fasse avec le réseau de communication favori (le dispositif nœud étant déployé dans la zone géographique du réseau de communication favori).

Selon un mode de réalisation particulier, l'augmentation progressive de la puissance d'émission RF comprend un palier initial, avec une valeur initiale non nulle de puissance d'émission RF, et un palier final, avec une valeur finale de puissance d'émission RF supérieure à la valeur initiale.

Une telle augmentation par paliers est simple à mettre en œuvre.

Selon un mode de réalisation particulier, l'augmentation progressive de la puissance d'émission RF comprend au moins un palier intermédiaire, avec une valeur intermédiaire de puissance d'émission RF supérieure à la valeur initiale et inférieure à la valeur finale.

Le palier intermédiaire permet d'augmenter les chances de parvenir à une connexion avant d'atteindre le palier final, et donc de limiter la distance physique à laquelle se trouve un autre dispositif nœud (jouant le rôle de nœud relais), ou bien le dispositif concentrateur, avec lequel le dispositif nœud entre en communication via une liaison RF.

Selon un mode de réalisation particulier, chaque palier autre que le palier initial débute à un instant qui est déterminé de manière aléatoire ou pseudo-aléatoire au sein d'un intervalle de temps prédéterminé et défini par rapport à un instant de démarrage initial ou de redémarrage du dispositif nœud.

Ceci permet d'éviter que des dispositifs nœuds appartenant à une même zone géographique, et redémarrant simultanément après un retour d'électricité suite à une coupure, augmentent simultanément leurs puissances d'émission RF (ce qui pourrait provoquer une mise à jour simultanée, dans ces dispositifs nœuds, de la route vers le dispositif concentrateur).

Selon un mode de réalisation particulier, après chaque augmentation de la puissance d'émission RF ayant abouti à une connexion via l'interface RF : mettre à jour une route depuis le dispositif nœud vers le dispositif concentrateur.

Ceci permet une amélioration de la topologie du réseau de communication en prenant en considération l'effet de la nouvelle puissance d'émission RF.

Selon un mode de réalisation particulier, après chaque connexion, dite connexion courante à un réseau de communication courant, faisant suite au démarrage initial ou à un redémarrage matériel ou logiciel du dispositif nœud :
- mettre à jour une table de connexions associant un nombre de connexions à chaque réseau de communication d'un sous-ensemble de réseaux de communication parmi la pluralité des réseaux de communication ;
- calculer un pourcentage, noté D, de connexions au réseau de communication courant, en fonction d'un nombre total S de connexions mentionnées dans la table de connexions ; et
- planifier, en fonction du nombre total S de connexions mentionnées dans la table de connexions et du pourcentage D de connexions au réseau de communication courant, un instant auquel effectuer un prochain redémarrage logiciel du dispositif nœud.

La planification ainsi proposée permet de converger plus rapidement vers une situation où le dispositif nœud réussi une connexion avec son réseau de communication favori (tel que défini plus haut), dans le cas où une autre connexion préalable a lieu avec un autre réseau de communication (voisin). En effet, le fait d'augmenter progressivement la puissance d'émission RF de l'interface RF lors d'une exécution de la procédure de connexion (c'est-à-dire le premier mécanisme de la solution proposée, décrit plus haut) n'empêche pas complètement que le dispositif nœud puisse se connecter, via une liaison RF, à un réseau de communication voisin plutôt qu'au réseau de communication favori (mais la probabilité d'une telle conclusion reste très faible).

Selon un mode de réalisation particulier, la mise à jour de la table de connexions comporte :
- si le réseau de communication courant n'est pas déjà présent dans la table de connexions, ajouter une nouvelle entrée dans la table de connexions pour le réseau de communication courant et avec un nombre de connexions égal à un ;
- si le réseau de communication courant est déjà présent dans la table de connexions, incrémenter de « un » le nombre de connexions associé au réseau de communication courant dans la table de connexions ;
- calculer le nombre total S de connexions mentionnées dans la table de connexions et :
   * si S ≤ N_connexions_Max, avec N_connexions_Max un nombre maximal de connexions autorisées, mettre fin à la mise à jour de la table de connexions ; et
   * si S > N_connexions_Max, décrémenter de « un » le nombre de connexions associé au réseau de communication qui, hormis le réseau de communication courant, possède le plus petit nombre de connexions dans la table de connexions, de sorte qu'après décrémentation S est égal à N_connexions_Max.

Ainsi la table de connexions constitue un historique des connexions aux réseaux de communication les plus pertinents, tout en limitant les ressources mémoires nécessaires grâce au paramètre N_connexions_Max.

Selon un mode de réalisation particulier, la planification de l'instant auquel effectuer le prochain redémarrage logiciel du dispositif nœud comporte :
- si S < N_connexions_Max, planifier le prochain redémarrage après une première durée ; et
- si S = N_connexions_Max, planifier le prochain redémarrage en fonction du pourcentage D de connexions au réseau de communication courant, selon un jeu de règles comprenant :
   * si D ≥ Seuil_H, avec Seuil_H un premier seuil prédéterminé, ne pas planifier le prochain redémarrage ;
   * si D < Seuil_H :
      - si D < Seuil_B, avec Seuil_B un deuxième seuil prédéterminé inférieur à Seuil-H, planifier le prochain redémarrage après la première durée ; et
      - si Seuil_B ≤ D < Seuil_H, planifier le prochain redémarrage après une deuxième durée supérieure à la première durée.

Ainsi, à partir du moment où S devient égal à N_connexions_Max, on tient compte du pourcentage D de connexions au réseau de communication courant pour décider de la planification du prochain redémarrage. On considère que plus D est élevé, plus on peut attendre avant le prochain redémarrage, car plus D est élevé plus la probabilité d'une connexion au réseau de communication favori est élevée. Ceci permet de limiter le nombre de redémarrages tout en garantissant une bonne convergence vers une situation dans laquelle le dispositif nœud est connecté à son réseau de communication favori.

Selon un mode de réalisation particulier, le dispositif nœud est un compteur communicant.

Selon un mode de réalisation particulier, les réseaux de communication sont des réseaux personnels.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

Il est aussi proposé un dispositif nœud comprenant une première interface de communication par courants porteurs en ligne, dite interface CPL, et une deuxième interface de communication par radiofréquences, dite interface RF, chacune des interfaces CPL et RF étant configurée pour exécuter une procédure de connexion du dispositif nœud à l'un quelconque d'une pluralité de réseaux de communication, chacun des réseaux de communication étant du type maillé et comprenant un dispositif concentrateur auquel peut se connecter un ensemble de dispositifs nœuds, le dispositif nœud comprenant une circuiterie électronique configurée pour implémenter le procédé évoqué ci-dessus selon l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau global, comprenant une pluralité de réseaux personnels et dans lequel l'invention peut être mise en œuvre ;
[Fig. 2] illustre schématiquement un des réseaux personnels de la Fig. 1, dans un mode de réalisation ;
[Fig. 3] illustre schématiquement l'architecture matérielle d'un dispositif nœud (ici un compteur électrique communicant), dans un mode de réalisation ;
[Fig. 4] illustre schématiquement un exemple de circuiterie électronique comprise dans le compteur électrique communicant de la Fig. 3 et détaillant le fonctionnement du processeur applicatif, dans un mode de réalisation ;
[Fig. 5] illustre schématiquement un exemple d'algorithme de déploiement sur terrain, exécuté par le compteur électrique communicant de la Fig. 3 ;
[Fig. 6] illustre schématiquement un exemple d'évolution, en fonction du temps, de la puissance d'émission RF de l'interface RF du compteur électrique communicant de la Fig. 3 ;
[Fig. 7] est un détail de l'étape 501 de la Fig. 5 et illustre schématiquement un exemple d'algorithme d'augmentation de la puissance d'émission RF de l'interface RF du compteur électrique communicant de la Fig. 3 ;
[Fig. 8] est un détail de l'étape 503 de la Fig. 5 et illustre schématiquement un exemple d'algorithme de mise à jour de la table de connexions ; et
[Fig. 9] est un détail de l'étape 504 de la Fig. 5 et illustre schématiquement un exemple d'algorithme de planification du prochain redémarrage du compteur électrique communicant.

### EXPOSE DETAILLE DE MODES DE REALISATION

La présente invention concerne un procédé de déploiement sur terrain d'un dispositif nœud hybride CPL et RF, c'est-à-dire comprenant une interface de communication CPL et une interface de communication RF. Chacune des interfaces CPL et RF est configurée pour exécuter une procédure de connexion du dispositif nœud à l'un quelconque d'une pluralité de réseaux de communication. Chacun de ces réseaux de communication est du type maillé et comprend un dispositif concentrateur auquel peut se connecter un ensemble de dispositifs nœuds (topologie logique sous forme d'arbre).

Dans la suite de la description, on considère à titre d'exemple illustratif le cas particulier où le dispositif nœud hybride est un compteur électrique communicant (aussi appelé « compteur intelligent » ou « smart meter ») utilisé pour une application de comptage intelligent (« smart metering ») et où les réseaux de communication sont des réseaux personnels (PAN).

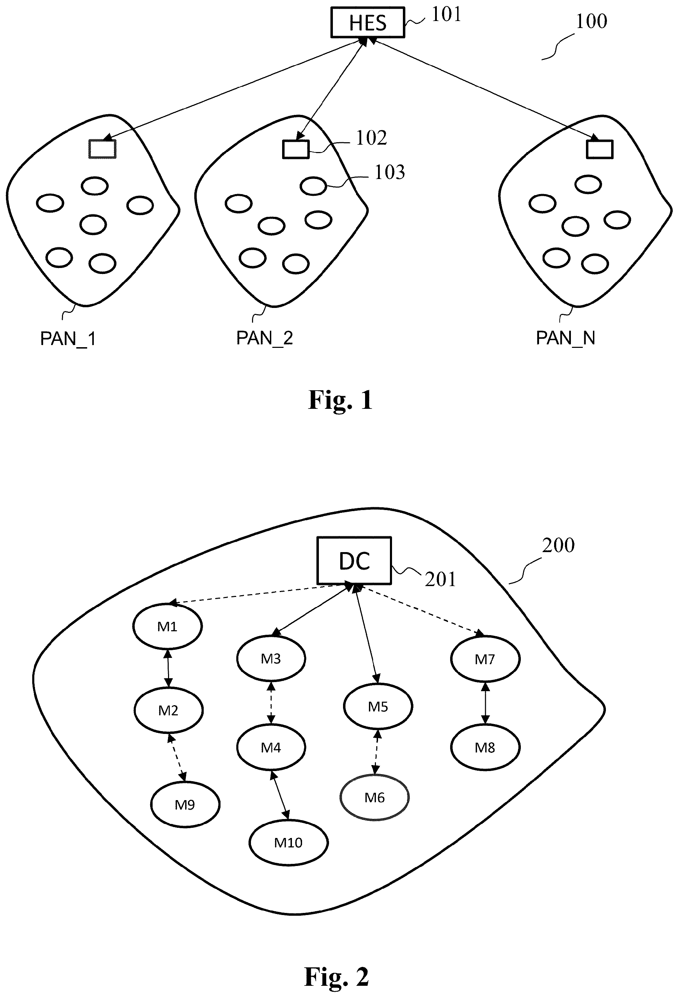

Ainsi, la **Fig. 1** illustre schématiquement un réseau global 100 pour une application de comptage intelligent, comprenant une pluralité de réseaux personnels PAN_1 à PAN_N et dans lequel l'invention peut être mise en œuvre. Chaque réseau personnel est géré par un dispositif concentrateur de données 102 qui joue un double rôle de collecteur et de passerelle. Chaque dispositif concentrateur 102 permet de communiquer d'une part avec des compteurs électriques communicants 103, via des liaisons CPL et RF, en formant ainsi un réseau maillé, et d'autre part avec un système de tête de réseau 101 (ou HES pour « Head End System » en anglais) via un autre protocole de communication (par exemple selon la technologie de communication cellulaire).

La **Fig. 2** illustre schématiquement un des réseaux personnels PAN_1 à PAN_N de la Fig. 1, dans un mode de réalisation. Le réseau personnel considéré sur la Fig. 2 est référencé 200 et est composé d'un dispositif concentrateur de données 201 (DC) et d'une pluralité de compteurs électriques communicants M1 à M10. Le concentrateur de données ainsi que les compteurs électriques communicants sont équipés de deux interfaces de communication, CPL et RF. Les compteurs M1 à M10 forment un réseau maillé avec le dispositif concentrateur DC, en utilisant des liaisons de communications mixtes CPL (flèches en trait continu) et RF (flèches en pointillé). A titre d'exemple, le compteur M10 permet de communiquer avec le dispositif concentrateur DC via trois sauts : deux sauts CPL (liaison CPL entre M10 et M4 et liaison CPL entre M3 et DC) et un saut RF (liaison RF entre M4 et M3).

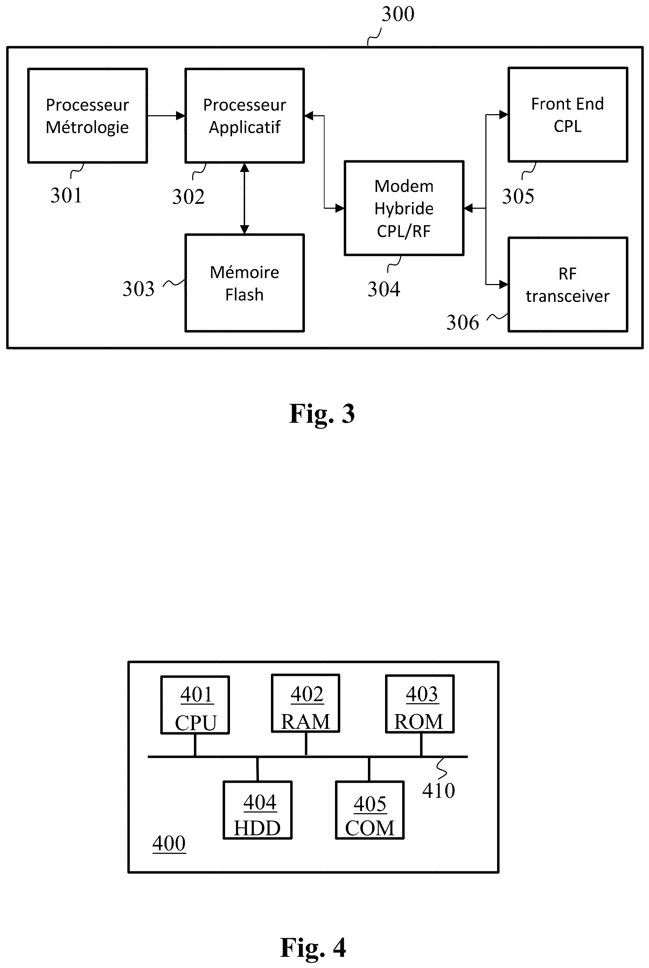

Dans le mode de réalisation illustré sur la **Fig. 3****,** un compteur électrique hybride CPL et RF (référencé ici 300) possède une architecture matérielle comprenant :
- un processeur de métrologie 301 qui, comme son nom l'indique, est utilisé pour la métrologie ;
- une mémoire Flash 303 stockant un programme (logiciel) applicatif ainsi qu'un programme (logiciel) de gestion des couches basses d'une pile protocolaire d'un modem hybride CPL et RF 304 ;
- un processeur applicatif 302 exécutant un programme d'application qui permet de gérer l'algorithme proposé dans la présente invention (procédé de déploiement sur terrain d'un dispositif nœud avec, dans un mode de réalisation, une augmentation progressive de la puissance d'émission RF durant l'exécution d'une procédure de connexion à un réseau personnel, une mise à jour d'une table de connexions et une planification d'un prochain redémarrage logiciel du dispositif nœud) ;
- le modem hybride CPL et RF 304 qui intègre les couches basses de la pile protocolaire hybride (par exemple selon le standard G3-PLC hybride ou le standard PRIME hybride) ;
- une interface CPL (« Front end CPL ») 305 pour interfacer le modem hybride 304 avec une ligne de transmission CPL ; et
- une interface RF (« Transceiver RF ») 306 pour interfacer le modem hybride 304 avec un support de transmission RF.

Concernant la technologie de communication hybride CPL et RF, le compteur électrique communicant 300 dispose par exemple de la pile protocolaire du standard G3-PLC spécifié dans la recommandation ITU-T G.9903, à partir de la version 2021 qui intègre le mode hybride, ou celle du standard PRIME (« PoweRline Intelligent Metering Evolution » en Anglais), à partir de la version 2022 qui intègre le mode hybride.

La **Fig. 4** illustre schématiquement un exemple de circuiterie électronique 400 comprise dans le compteur électrique communicant 300 de la Fig. 3 et détaillant le fonctionnement du processeur applicatif 302, dans un mode de réalisation.

La circuiterie électronique 400 comprend alors, reliés par un bus de communication 410 : un processeur (ou CPU pour « Central Processing Unit » en anglais) 401 (correspondant au processeur applicatif 302 de la Fig. 3) ; une mémoire vive (ou RAM pour « Random Access Memory » en anglais) 402 ; une mémoire morte (ou ROM pour « Read Only Memory » en anglais) 403 (correspondant à la mémoire Flash 303 de la Fig. 3) ; un dispositif de stockage de données, tel qu'un disque dur (ou HDD pour « Hard Disk Drive » en anglais) ou un lecteur de support de stockage (tel qu'un lecteur de cartes SD (« Secure Digital » en anglais) 404 ; et au moins une interface de communication 405.

Le processeur 401 est capable d'exécuter des instructions qui forment un programme d'ordinateur et qui sont chargées dans la RAM 402 à partir de la ROM 403, d'une mémoire externe (non représentée), d'un autre support de stockage (tel qu'une carte SD), ou d'un réseau de communication (non représenté). Lorsque la circuiterie électronique 400 est mise sous tension, le processeur 401 est capable de lire de la RAM 402 les instructions précitées et de les exécuter. Quand elles sont lues (depuis la RAM 402 ou un support de stockage) et exécutées par le processeur 401, ces instructions (qui forment un programme d'ordinateur) entraînent l'exécution, par le processeur 401, des comportements, étapes et algorithme décrits ici.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, la circuiterie électronique 400 est agencée et configurée pour implémenter les comportements, étapes et algorithmes décrits ici.

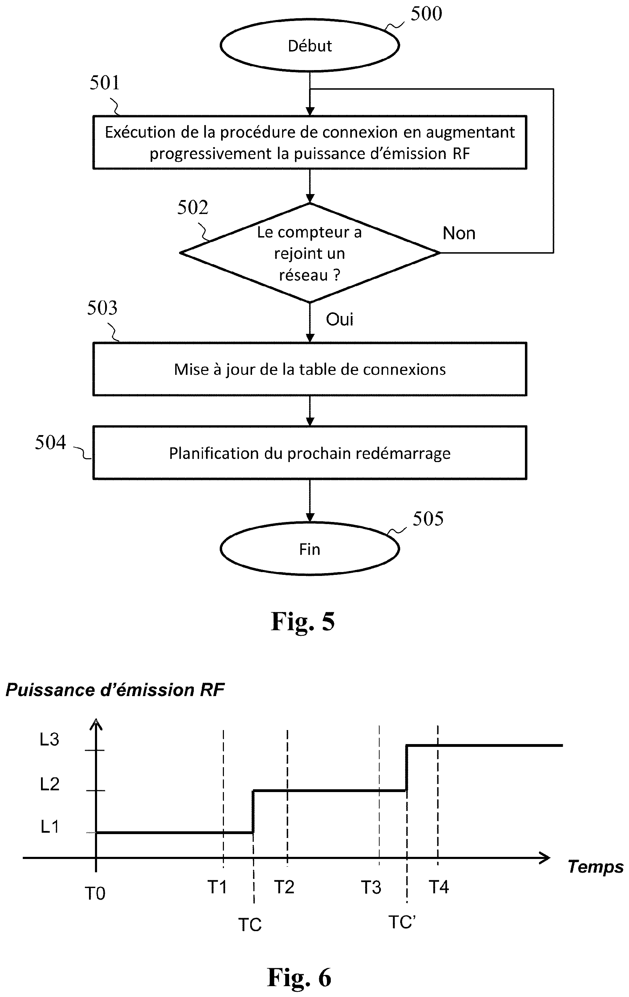

La **Fig. 5** illustre schématiquement un exemple d'algorithme de déploiement sur terrain. Il est exécuté par le compteur électrique communicant 300 de la Fig. 3 (et plus précisément son processeur applicatif 302) au démarrage initial du compteur puis à chaque redémarrage (matériel ou logiciel) du compteur.

Après le lancement de l'algorithme (étape de début 500), le compteur exécute l'étape 501 dans laquelle il augmente progressivement la puissance d'émission RF de l'interface RF lors d'une exécution de la procédure de connexion, de façon à supprimer ou réduire un phénomène de migration du compteur (dispositif nœud) 300 depuis un réseau de communication favori vers un autre réseau de communication de la pluralité de réseaux personnels PAN_1 à PAN_N. Comme déjà défini plus haut, par réseau personnel favori pour un compteur électrique, on entend le réseau personnel dont le dispositif concentrateur est installé dans le poste de transformation électrique BT (Basse Tension) duquel est issu le réseau de distribution électrique sur lequel est installé ce compteur électrique.

Ceci permet au compteur d'être prioritaire pour rejoindre un réseau personnel, soit à travers une liaison CPL (établie grâce à son interface CPL) avec un autre compteur (ou le dispositif concentrateur), soit à travers une liaison RF (établie grâce à son interface RF) avec un autre compteur (ou le dispositif concentrateur) très proche physiquement. Il est à noter que cette étape n'empêche pas totalement qu'un compteur appartenant à une zone géographique donnée puisse rejoindre, via une liaison RF, non pas son réseau personnel favori mais un réseau personnel voisin correspondant à une autre zone géographique. Pour gérer une telle situation, dont la probabilité est très faible, les étapes 503 et 504 décrites ci-après visent à augmenter les chances que le compteur rejoigne le plus rapidement possible son réseau personnel favori (amélioration de la convergence vers le réseau personnel favori).

Comme déjà mentionné plus haut, par réseau personnel favori d'un compteur électrique communicant on entend le réseau personnel dont le dispositif concentrateur est installé dans le poste de transformation électrique BT (Basse Tension) duquel est issu le réseau de distribution électrique sur lequel est installé ce compteur électrique communicant.

Dans une étape 502, le compteur vérifie s'il a rejoint (c'est-à-dire s'il s'est connecté à) un des réseaux personnels PAN-1 à PAN_N. S'il ne s'est pas connecté à un des réseaux personnels (réponse « non » au test de l'étape 502), le compteur exécute à nouveau l'étape 501. S'il a réussi à se connecter à un des réseaux personnels (réponse « oui » au test de l'étape 502), via l'interface CPL ou l'interface RF, le compteur exécute l'étape 503, dans laquelle il met à jour une table de connexions associant un nombre de connexions à chaque réseau de communication d'un sous-ensemble de réseaux de communication parmi la pluralité des réseaux de communication PAN-1 à PAN_N, puis l'étape 504, dans laquelle il planifie, en fonction d'un nombre total S de connexions mentionnées dans la table de connexions et d'un pourcentage D de connexions au réseau de communication courant (lui-même calculé en fonction de S), un instant auquel effectuer un prochain redémarrage (logiciel) , et enfin il passe à l'étape de fin 505.

Comme détaillé par la suite, la table de connexions du compteur électrique contient l'historique des connexions du compteur aux réseaux personnels les plus concernés, c'est-à-dire les réseaux personnels les plus utilisés lors des dernières opérations de connexion du compteur en question. A un moment donné, un réseau personnel est dit concerné si c'est le réseau personnel auquel le compteur électrique est connecté (il est aussi appelé réseau personnel courant) ou un réseau personnel auquel le compteur a été connecté plusieurs fois dans un proche proche passé.

### Discussion détaillée de l'étape 501 d'augmentation progressive de la puissance d'émission

Après un redémarrage logiciel ou matériel, un compteur électrique hybride CPL et RF tente de rejoindre un réseau personnel en envoyant une trame de type balise (« BEACON » en anglais) ou une trame de type demande de promotion (ou PNPDU pour « Promotion Needed Protocol Data Unit » en anglais) sur les deux interfaces de communication CPL et RF.

Une trame PNPDU est une trame envoyée par un compteur électrique communicant qui souhaite rejoindre un réseau mais qui n'a pas reçu de trames de type balise (« BEACON ») (voir la section 4.4.3 de la dernière version de la spécification PRIME 1.4 publiée en 17 novembre 2023)

Physiquement, les signaux CPL émis par le compteur sont atténués et bloqués au niveau du poste de transformation électrique BT (dans lequel est installé le dispositif concentrateur du réseau personnel favori) tandis que les signaux RF peuvent se propager dans l'espace libre.

Ceci implique que le compteur en question peut démarrer la procédure de connexion à un réseau personnel voisin, via une liaison de communication RF.

Les paramètres radiofréquences (bande de fréquence, modulation, débit de transmission, déviation de fréquence, espacement entre les canaux de transmission fréquentielles, etc.) sont par exemple définis dans les deux normes IEEE Std 802.15.4aa^{™}-2022 publiée en février 2022 et IEEE Std 802.15.4^{™}-2020 (révision de la norme IEEE Std 802.15.4-2015). La bande de fréquences utilisée en Europe est 863-876 MHz tandis que la bande de fréquences 902 - 928 MHz est utilisée aux États-Unis.

Afin de réduire l'effet de la propagation RF des signaux, le principe général de la présente invention est, en ce qui concerne l'interface RF du compteur, de démarrer la procédure de connexion en utilisant une puissance minimale pour la transmission RF. Puis cette puissance d'émission RF augmente en fonction du temps, pour finalement se stabiliser à une valeur nominale fixée par la réglementation.

En prenant le cas de l'Europe, la puissance d'émission RF maximale autorisée par la réglementation dépend de la bande de fréquences utilisée. Ces valeurs sont définies dans l'annexe B de la norme ETSI EN 300 220-2 V3.1.1 publiée en février 2017. Par exemple, dans la bande [869,4 - 869,65 MHz], la puissance apparente rayonnée maximale (ERP pour « Effective Radiative Power » en anglais) peut atteindre +27 dBm (équivalent à 500 mW).

La **Fig. 6** illustre schématiquement un exemple d'évolution, en fonction du temps, de la puissance d'émission RF de l'interface RF du compteur électrique communicant de la Fig. 3. Dans cet exemple d'évolution, l'augmentation progressive de la puissance d'émission RF comprend :
- un palier initial, avec une valeur initiale L1 (dite « Faible ») non nulle de puissance d'émission RF ;
- un palier intermédiaire, avec une valeur intermédiaire L2 (dite « Moyenne ») de puissance d'émission RF supérieure à la valeur initiale L1 ; et
- un palier final, avec une valeur finale L3 (dite « Nominale ») de puissance d'émission RF supérieure à la valeur intermédiaire L2.

Dans une variante, il n'y a pas de palier intermédiaire. Dans une autre variante, il y a plusieurs paliers intermédiaires.

Par exemple et pour un déploiement sur terrain de la technologie hybride CPL et RF en Europe et si on utilise comme bande de fréquences [869,4 - 869,65 MHz], la puissance maximale autorisée par la réglementation égale à +27 dBm. Dans ce cas, on peut utiliser, dans une implémentation de la présente cette invention, les trois niveaux de puissance d'émission RF suivants :
- $L 1 \left(niveau bas\right) = - 25 dBm \left(équivalent à 3 x {10}^{- 3} nW\right) ;$
- $L 2 \left(niveau moyen\right) = 0 dBm \left(équivalent à 1 mW\right) ;$
- $L 3 \left(niveau nominal\right) = + 27 dBm \left(équivalent à 500 mW\right) /$

Les instants T0, T1, T2, T3 et T4, ainsi que TC et TC', sont définis comme suit :
- T0 : instant de redémarrage (logiciel ou matériel) du compteur électrique communicant ;
- T1, T2 : deux instants entre lesquels le compteur choisit un instant aléatoire (TC) auquel sa puissance d'émission RF augmente de la valeur basse L1 à la valeur moyenne L2 ; et
- T3, T4 : deux instants entre lesquels le compteur choisit un instant aléatoire (TC') auquel sa puissance d'émission RF augmente de la valeur moyenne L2 à la valeur nominale L3.

Le choix des couples d'instants (T1, T2) et (T3, T4) permet essentiellement d'éviter que les compteurs électriques communicants appartenant à une même zone géographique augmentent simultanément leurs puissances d'émission RF après un retour d'électricité suite à une coupure.

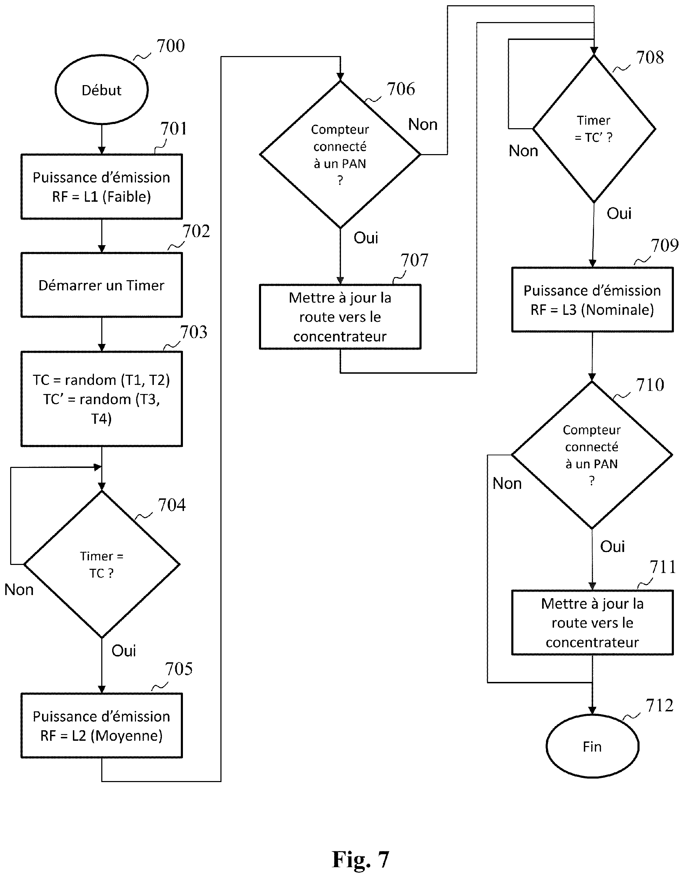

La **Fig. 7** est un détail de l'étape 501 de la Fig. 5 et illustre schématiquement un exemple d'algorithme d'augmentation de la puissance d'émission RF de l'interface RF du compteur électrique communicant de la Fig. 3.

On note random (x, y) une fonction qui génère un nombre entier aléatoire appartenant à l'intervalle [x ; y].

Après le lancement de l'algorithme (étape de début 700), le compteur exécute l'étape 701 dans laquelle l'interface RF commence avec une puissance d'émission RF égale à la valeur L1 (faible). Dans une étape 702, le compteur démarre un chronomètre (Timer). Dans une étape 703, le compteur initialise les variables TC et TC' comme suit : TC = random (T1, T2) et TC' = random (T3, T4).

Dans une étape de test 704, le compteur détecte si la condition « Timer = TC » est vérifiée. Dans la négative (réponse « non » au test de l'étape 704), le compteur reboucle sur l'étape 704. Dans l'affirmative (réponse « oui » au test de l'étape 704), le compteur exécute l'étape 705 dans laquelle l'interface RF augmente la puissance d'émission RF en passant de la valeur L1 (faible) à la valeur L2 (moyenne).

L'étape 705 est suivie de l'étape de test 706 dans laquelle le compteur détermine s'il a réussi à se connecter à un réseau personnel (PAN).

S'il a réussi à se connecter à un réseau personnel (réponse « oui » à l'étape de test 706), le compteur exécute l'étape 707, dans laquelle il met à jour sa route vers le dispositif concentrateur, puis l'étape de test 708, dans laquelle il détecte si la condition « Timer = TC' » est vérifiée. S'il n'a pas réussi à se connecter à un réseau personnel (réponse « non » à l'étape de test 706), le compteur exécute directement l'étape de test 708.

En cas de réponse « non » au test de l'étape 708, le compteur reboucle sur l'étape 708. En cas de réponse « oui » au test de l'étape 708, le compteur exécute l'étape 709 dans laquelle l'interface RF augmente la puissance d'émission RF en passant de la valeur L2 (moyenne) à la valeur L3 (nominale).

L'étape 709 est suivie de l'étape de test 710 dans laquelle le compteur détermine s'il a réussi à se connecter à un réseau personnel (PAN). En cas de réponse « oui » à l'étape de test 710, le compteur exécute l'étape 711, dans laquelle il met à jour sa route vers le dispositif concentrateur, avant d'arriver à l'étape de fin 712. En cas de réponse « non » à l'étape de test 710, le compteur passe directement à l'étape de fin 712.

On notera que même s'il a réussi à se connecter à un réseau personnel avec une puissance d'émission RF faible (L1) ou moyenne (L2), le compteur continue d'augmenter progressivement sa puissance d'émission RF pour atteindre, au final, la puissance nominale (L3). Cette augmentation progressive de la puissance d'émission RF jusqu'à la valeur nominale (L3) est très intéressante pour la construction de la totalité du réseau personnel (réseau maillé), dans lequel le compteur considéré ici peut jouer le rôle de répéteur pour d'autres compteurs.

On notera également qu'après chaque augmentation de la puissance d'émission RF suivie d'une connexion à un réseau personnel, le compteur électrique communicant met à jour sa route vers le dispositif concentrateur de données (voir étapes 707 et 711). Ceci permet une amélioration de la topologie du réseau personnel hybride, en prenant en considération l'effet de la nouvelle puissance d'émission RF.

Par exemple, en se basant sur la spécification hybride du standard G3-PLC et afin de mettre à jour ou établir une nouvelle route vers le dispositif concentrateur de données, le compteur électrique communicant lance la primitive « G3ADP-ROUTEDISCOVERY.Request » avec les paramètres suivants :
- DSTADDR = 0x0000 ;
- MAXHOPS = XX, où XX signifie n'importe quelle valeur codée sur 1 octet ;
- NEXTHOP = 0xFFFF ; et
- MEDIATYPE = YY, où YY signifie une valeur codée sur 1 octet et qui peut être 0 ou 1.

Ces paramètres sont définis dans la recommandation ITU-T G.9903, version 2021, qui intègre le profil hybride comme suit :
- DSTADDR représente l'adresse de destination finale codée sur 16 bits ;
- MAXHOPS est le nombre maximal de sauts autorisés par le protocole hybride pour qu'un compteur électrique puisse communiquer avec le dispositif concentrateur de données ;
- NEXTHOP représente l'adresse du prochain saut, si déjà connue, vers lequel le RREQ sera transmis. Si le NEXTHOP est défini avec 0xFFFF, la procédure de découverte de route sera exécutée ; et
- MEDIATYPE est le type de canal de transmission utilisé pour communiquer avec le NEXTHOP (0x00 : CPL ; 0x01 : RF).

### Discussion détaillée de l'étape 503 de mise à jour de la table de connexions

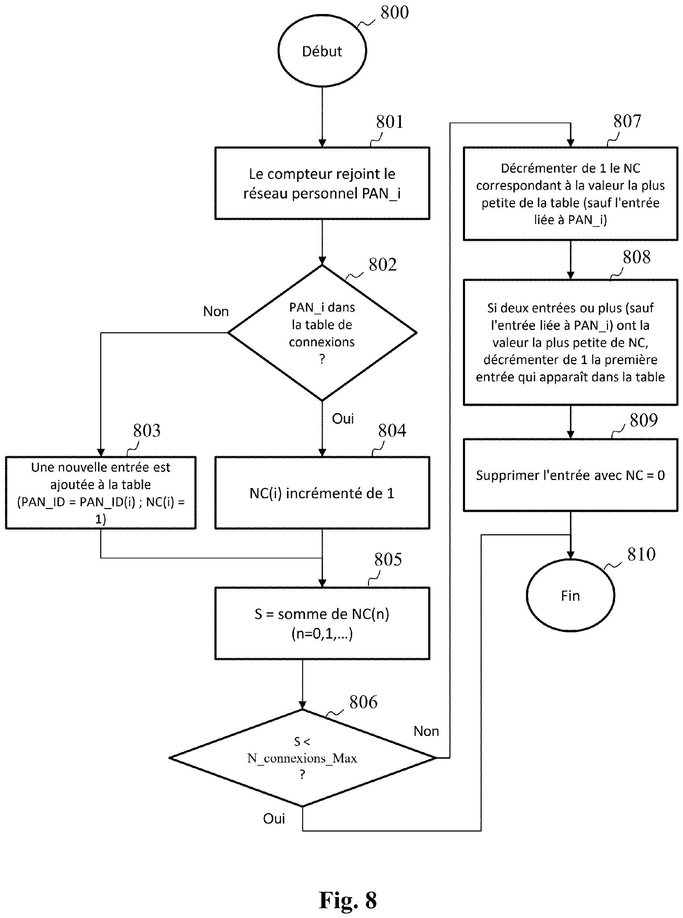

La **Fig. 8** est un détail de l'étape 503 de la Fig. 5 et illustre schématiquement un exemple d'algorithme de mise à jour de la table de connexions.

Chaque entrée « i » de cette table de connexions est un couple (PAN_ID(i), NC(i)) où
- PAN_ID(i) est un identifiant (PAN_ID) de réseau personnel, codé sur deux octets ; et
- NC(i) est un nombre de connexions du compteur à ce réseau personnel, codé sur un octet.

A titre d'exemple, le tableau 1 suivant représente une table de connexions d'un compteur électrique après neuf redémarrages :

**[Tableau 1]**

| PAN_ID | NC |
|---|---|
| 0x1111 | 5 |
| 0x2222 | 1 |
| 0x3333 | 2 |
| 0x4444 | 1 |

Dans cet exemple, le compteur a été enregistré cinq fois au réseau personnel d'ID = 0x1111, deux fois au réseau personnel d'ID = 0x3333 et une seule fois au réseau personnel d'ID = 0x2222 et au réseau personnel d'ID = 0x4444.

Dans l'objectif d'affiner l'historique des connexions et de limiter la taille mémoire de la table de connexions, uniquement un nombre limité de connexions est pris en considération. Ce nombre est noté par « N_connexions_Max ». Ainsi, la taille maximale de la table de connexions est égale à « N_connexions_Max » entrées.

La mise à jour de la table de connexions est effectuée automatiquement par le compteur électrique communicant, après chaque connexion à un réseau personnel. On suppose donc qu'après redémarrage logiciel ou matériel, le compteur électrique est connecté à un réseau personnel courant PAN_ID (i) (à l'issue de l'étape 801 faisant suite à l'étape de début 800).

Dans une étape de test 802, le compteur vérifie si le réseau personnel courant PAN_ID(i) est déjà présent dans la table de connexions. En cas de réponse « non » à l'étape de test 802, le compteur exécute une étape 803, dans laquelle il ajoute une nouvelle entrée dans la table de connexions pour le réseau personnel courant (PAN_ID = PAN_ID(i)) et avec un nombre de connexions égal à un (NC = NC(i) =1). En cas de réponse « oui » à l'étape de test 802, le compteur exécute une étape 804, dans laquelle il incrémenter de « un » le nombre de connexions NC(i) associé au réseau personnel courant (PAN_ID(i)) dans la table de connexions.

Après l'étape 803 ou 804, le compteur exécute l'étape 805, dans laquelle il calcule le nombre total S de connexions mentionnées dans la table de connexions (S = somme de NC(n) avec n=0,1,...), puis l'étape 806, dans laquelle il détecte si la condition « S ≤ N_connexions_Max » est vérifiée.

En cas de réponse « non » à l'étape de test 806, le compteur met fin à la mise à jour de la table de connexions (étape de fin 810).

En cas de réponse « oui » à l'étape de test 806, le compteur exécute l'étape 807 dans laquelle il décrémente de « un » le nombre de connexions (NC) associé au réseau personnel qui, hormis le réseau personnel courant, possède le plus petit nombre de connexions dans la table de connexions. Ainsi, après décrémentation, S est égal à N_connexions_Max. Dans l'étape 808 qui complète l'étape 807, si deux entrées ou plus ont le même plus petit nombre de connexions, à l'exception de l'entrée pour le réseau personnel courant, alors la première entrée qui apparaît dans la table de connexions est affectée en décrémentant son nombre de connexions (NC) de « un ». Dans l'étape 809, le compteur supprime du tableau de connexions toute entrée dont le nombre de connexions (NC) est égal à zéro, puis il passe à l'étape de fin 810.

A titre d'exemple, le tableau 2 suivant représente une table de connexions d'un compteur électrique communicant avant mise à jour :

**[Tableau 2]**

| PAN ID | Nombre de connexions (NC) |
|---|---|
| 0x5777 | 4 |
| 0x7755 | 4 |
| 0x4545 | 2 |

On suppose que « N_connexions_Max » = 10 et qu'après un redémarrage logiciel ou matériel, le compteur en question a rejoint le réseau personnel d'ID = 0x4545 (réseau personnel courant). Donc, le nombre de connexions correspondant au PAN_ID = 0x4545 est incrémenté de « un » et devient égal à trois.

La somme S des nombres de connexions après la connexion au réseau personnel courant d'ID 0x4545 est donné par : S = 4 + 4 + 3 = 11.

S est supérieur à « N_connexions_Max », donc le compteur incrémente de « un » le nombre de connexions correspondant à l'entrée qui présente la plus petite valeur de NC à l'exception du réseau personnel courant 0x4545, Ici les deux PAN ID 0x5777 et 0x7755 ont un nombre de connexions égal à 4. Alors, le nombre de connexions correspondant au PAN ID 0x5777 est décrémenté de « un » 1 et devient égal à trois.

La table de connexions après cette mise à jour est donnée par le tableau 3 suivant :

**[Tableau 3]**

| PAN ID | Nombre de connexions (NC) |
|---|---|
| 0x5777 | 3 |
| 0x7755 | 4 |
| 0x4545 | 3 |

### Discussion détaillée de l'étape 504 de planification du prochain redémarrage

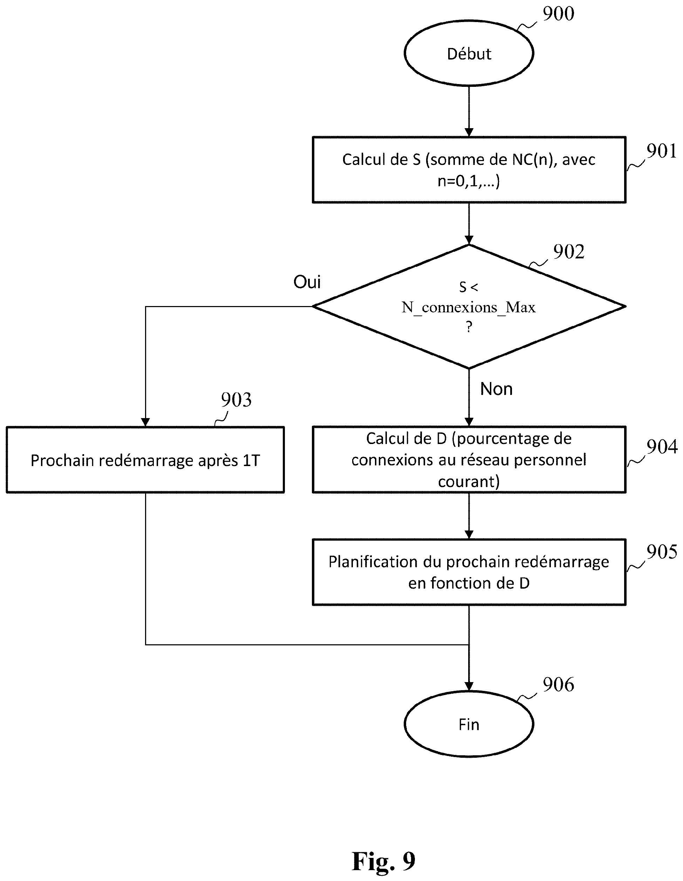

La **Fig. 9** est un détail de l'étape 504 de la Fig. 5 et illustre schématiquement un exemple d'algorithme de planification du prochain redémarrage du compteur électrique communicant. Comme expliqué plus haut, après la connexion à un réseau personnel et la mise à jour de sa table de connexions, le compteur électrique communicant planifie l'instant du prochain redémarrage.

Après le lancement de l'algorithme (étape de début 900), le compteur exécute l'étape 901, dans laquelle il calcule le nombre total S de connexions mentionnées dans la table de connexions après l'étape de mise à jour (S = somme de NC(n) avec n=0,1,...), puis l'étape 902, dans laquelle il détecte si la condition « S < N_connexions_Max » est vérifiée.

En cas de réponse « oui » à l'étape de test 902, le compteur exécute l'étape 903, dans laquelle il planifie le prochain redémarrage après une première durée (T), puis il passe à l'étape de fin 906.

En cas de réponse « non » à l'étape de test 902 (c'est-à-dire si S = N_connexions_Max), le compteur exécute l'étape 904, dans laquelle il calcule un pourcentage, noté D, de connexions au réseau personnel courant en fonction de S (calculé à l'étape 902), puis l'étape 905, dans laquelle il planifie le prochain redémarrage en fonction de D, selon un jeu de règles prédéterminées, et enfin il passe à l'étape de fin 906.

Dans une première implémentation, le compteur utilise le jeu de règles suivant :
- si D ≥ Seuil_H, avec Seuil_H un premier seuil prédéterminé (par exemple 90%), ne pas planifier le prochain redémarrage ;
- si D < Seuil_H :
   ∘ si D < Seuil_B, avec Seuil_B un deuxième seuil prédéterminé (par exemple 30%) inférieur à Seuil-H, planifier le prochain redémarrage après la première durée (T) ; et
   ∘ si Seuil_B ≤ D < Seuil_H, planifier le prochain redémarrage après une deuxième durée (par exemple 2T ou 3T) supérieure à la première durée (T).

Dans une deuxième implémentation, le compteur utilise le jeu de règles défini par le tableau 4 suivant (table de correspondance de planification du prochain redémarrage) :

**[Tableau 4]**

| | |
|---|---|
| D (%) | Prochain redémarrage logiciel après : |
| D<30 | 1T |
| 30 =< D <60 | 2T |
| 60 =< D <90 | 3T |
| D >= 90 | Pas de redémarrage logiciel |

A titre d'exemple, on prend le dernier exemple discuté plus haut, où la table de connexions après mise à jour est donnée par le tableau 3. On suppose que T = 24 heures. D'après la table de connexions après mise à jour, S = N_connexions_Max, donc le compteur calcule le pourcentage de connexion au réseau personnel courant de PAN ID = 0x4545. Ici D = 30%. D'après la table de correspondance (tableau 4), le prochain redémarrage sera planifié après 2T, c'est-à-dire après deux jours.

## Revendications

1. Procédé de déploiement sur terrain d'un dispositif nœud (103 ; M1 à M10 ; 300 ; 400) comprenant une première interface de communication par courants porteurs en ligne, dite interface CPL (305), et une deuxième interface de communication par radiofréquences, dite interface RF (306), chacune des interfaces CPL et RF étant configurée pour exécuter une procédure de connexion du dispositif nœud à l'un quelconque d'une pluralité de réseaux de communication (PAN_1 à PAN_N), chacun des réseaux de communication étant du type maillé et comprenant un dispositif concentrateur (102 ; DC) auquel peut se connecter un ensemble de dispositifs nœuds, le procédé étant implémenté par une circuiterie électronique comprise dans le dispositif nœud, le procédé étant **caractérisé en ce qu'**il comporte, au démarrage initial puis à chaque redémarrage matériel ou logiciel du dispositif nœud : augmenter progressivement (501 ; 701, 705, 709) une puissance d'émission RF de l'interface RF lors d'une exécution de la procédure de connexion, de façon à supprimer ou réduire un phénomène de migration du dispositif nœud depuis un réseau de communication favori vers un autre réseau de communication de ladite pluralité de réseaux de communication.

2. Procédé selon la revendication 1, dans lequel l'augmentation progressive de la puissance d'émission RF comprend un palier initial, avec une valeur initiale (L1) non nulle de puissance d'émission RF, et un palier final, avec une valeur finale (L3) de puissance d'émission RF supérieure à la valeur initiale.

3. Procédé selon la revendication 2, dans lequel l'augmentation progressive de la puissance d'émission RF comprend au moins un palier intermédiaire, avec une valeur intermédiaire (L2) de puissance d'émission RF supérieure à la valeur initiale (L1) et inférieure à la valeur finale (L3).

4. Procédé selon l'une quelconque des revendications 2 et 3, dans lequel chaque palier autre que le palier initial débute à un instant (TC, TC') qui est déterminé de manière aléatoire ou pseudo-aléatoire au sein d'un intervalle de temps prédéterminé (T1-T2, T3-T4) et défini par rapport à un instant (T0) de démarrage initial ou de redémarrage du dispositif nœud.

5. Procédé selon l'une quelconque des revendications 1 à 4, comportant, après chaque augmentation de la puissance d'émission RF ayant abouti à une connexion via l'interface RF : mettre à jour (707, 711) une route depuis le dispositif nœud vers le dispositif concentrateur.

6. Procédé selon l'une quelconque des revendications 1 à 5, comportant, après chaque connexion, dite connexion courante à un réseau de communication courant, faisant suite au démarrage initial ou à un redémarrage matériel ou logiciel du dispositif nœud :
- mettre à jour (503) une table de connexions associant un nombre de connexions à chaque réseau de communication d'un sous-ensemble de réseaux de communication parmi la pluralité des réseaux de communication ;
- calculer (904) un pourcentage, noté D, de connexions au réseau de communication courant, en fonction d'un nombre total S de connexions mentionnées dans la table de connexions ; et
- planifier (504), en fonction du nombre total S de connexions mentionnées dans la table de connexions et du pourcentage D de connexions au réseau de communication courant, un instant auquel effectuer un prochain redémarrage logiciel du dispositif nœud.

7. Procédé selon la revendication 6, dans lequel la mise à jour de la table de connexions comporte :
- si le réseau de communication courant n'est pas déjà présent dans la table de connexions, ajouter (803) une nouvelle entrée dans la table de connexions pour le réseau de communication courant et avec un nombre de connexions égal à un ;
- si le réseau de communication courant est déjà présent dans la table de connexions, incrémenter (804) de « un » le nombre de connexions associé au réseau de communication courant dans la table de connexions ;
- calculer (805) le nombre total S de connexions mentionnées dans la table de connexions et :
* si S ≤ N_connexions_Max, avec N_connexions_Max un nombre maximal de connexions autorisées, mettre fin (810) à la mise à jour de la table de connexions ; et
* si S > N_connexions_Max, décrémenter (807) de « un » le nombre de connexions associé au réseau de communication qui, hormis le réseau de communication courant, possède le plus petit nombre de connexions dans la table de connexions, de sorte qu'après décrémentation S est égal à N_connexions_Max.

8. Procédé selon la revendication 7, dans lequel la planification de l'instant auquel effectuer le prochain redémarrage logiciel du dispositif nœud comporte :
- si S < N_connexions_Max, planifier (903) le prochain redémarrage après une première durée (T) ; et
- si S = N_connexions_Max, planifier (905) le prochain redémarrage en fonction du pourcentage D de connexions au réseau de communication courant, selon un jeu de règles comprenant :
* si D ≥ Seuil_H, avec Seuil_H un premier seuil prédéterminé, ne pas planifier le prochain redémarrage ;
* si D < Seuil_:
• si D < Seuil_B, avec Seuil_B un deuxième seuil prédéterminé inférieur à Seuil-H, planifier le prochain redémarrage après la première durée (T) ; et
• si Seuil_B ≤ D < Seuil_H, planifier le prochain redémarrage après une deuxième durée (2T ou 3T) supérieure à la première durée (T).

9. Procédé selon l'une quelconque des revendications 1 à 8, dans lequel le dispositif nœud est un compteur communicant.

10. Procédé selon l'une quelconque des revendications 1 à 9, dans lequel les réseaux de communication sont des réseaux personnels (PAN_1 à PAN_N).

11. Produit programme d'ordinateur, comportant des instructions entraînant l'exécution, par un processeur (401), du procédé selon l'une quelconque des revendications 1 à 10, lorsque lesdites instructions sont exécutées par le processeur.

12. Support de stockage, stockant un programme d'ordinateur comportant des instructions entraînant l'exécution, par un processeur (401), du procédé selon l'une quelconque des revendications 1 à 10, lorsque lesdites instructions sont lues depuis le support de stockage et exécutées par le processeur.

13. Dispositif nœud (103 ; M1 à M10 ; 300 ; 400) comprenant une première interface de communication par courants porteurs en ligne, dite interface CPL (305), et une deuxième interface de communication par radiofréquences, dite interface RF (306), chacune des interfaces CPL et RF étant configurée pour exécuter une procédure de connexion du dispositif nœud à l'un quelconque d'une pluralité de réseaux de communication (PAN_1 à PAN_N), chacun des réseaux de communication étant du type maillé et comprenant un dispositif concentrateur (102 ; DC) auquel peut se connecter un ensemble de dispositifs nœuds, le dispositif nœud comprenant une circuiterie électronique **caractérisée en ce qu'**elle est configurée pour implémenter le procédé selon l'une quelconque des revendications 1 à 10.
